# EUROPEAN PATENT SPECIFICATION

(11) **EP 1 477 735 B1**
(45) Date of publication and mention of the grant of the patent: **14.10.2009**
(21) Application number: 04007842.0
(22) Date of filing: 31.03.2004
(51) Int. Cl.: F23C 6/04, F23C 7/00

(54) **Burner apparatus**
Brennervorrichtung
Dispositif de brûleur

(30) Priority: 12.05.2003 JP 2003132499
(43) Date of publication of application: 17.11.2004
(73) Proprietor: Chugai Ro Co., Ltd., Osaka-shi, Osaka (JP)
(72) Inventor: Nakagawa, Hiroo, Osaka-shi Osaka (JP); Yoshida, Seiji, Osaka-shi Osaka (JP); Ikeda, Isamu, Osaka-shi Osaka (JP); Arita, Saiji, Osaka-shi Osaka (JP)
(74) Representative: Glawe, Delfs, Moll

(56) References cited:
- WO-A-01/35022
- JP-A- 52 118 633
- US-A- 4 277 942
- US-A- 4 842 509
- US-A- 5 799 594

## Description

### Field of the Invention

The present invention relates to a burner apparatus. More particularly, the invention is directed to further reduction of NOx production of the burner apparatus such that combustion exhaust gases may contain a decreased amount of NOx, the burner apparatus including: a fuel supply nozzle for supplying a fuel; a primary-air supply nozzle for supplying a less-than theoretical quantity of primary air based on the fuel supplied from the fuel supply nozzle; a primary combustion section for combusting the above fuel and primary air; and secondary-air supply nozzles disposed at place outside a periphery of the primary combustion section and serving to supply a secondary air.

### Description of the Related Art

For the purpose of environmental protection, there have conventionally been made investigations on methods for reducing the amount of NOx present in combustion exhaust gases as product of combustion.

One of the methods for reducing the amount of NOx in the combustion exhaust gases is disclosed in Japanese Examined Patent Publication No.55-30161. The patent publication proposes a burner apparatus adapted for staged combustion operation, the apparatus including a fuel supply nozzle for supplying a fuel; a primary-air supply nozzle for supplying a less-than theoretical quantity of primary air based on the fuel supplied from the fuel supply nozzle; a primary combustion section for combusting the fuel and primary air; and a secondary-air supply nozzle disposed at place outside a periphery of the primary combustion section and serving to supply a secondary air.

The burner apparatus takes the following approach to reduce the production of NOx. That is, the above fuel is mixed with a less-than theoretical quantity of primary air so as to effect incomplete combustion (primary combustion). The secondary air is supplied to the primary combustion flame thereby to effect secondary combustion such that an oxygen concentration in a combustion zone may be decreased while the temperature of the flame may be lowered during combustion. Thus, the production of NOx is decreased.

More recently, however, the environmental standards have become even stricter, demanding further reduction of the amount of NOx present in the combustion exhaust gases. The conventional burner apparatus as mentioned above cannot fully meet the demand. Hence, the apparatus need be improved further.

WO 01/35022 A1 discloses a burner apparatus according to the preamble of claim 1.

### SUMMARY OF THE INVENTION

An object of the invention is to improve a burner apparatus for achieving further reduction of NOx present in combustion exhaust gases, the apparatus adapted for staged combustion operation and including: a fuel supply nozzle for supplying a fuel; a primary-air supply nozzle for supplying a less-than theoretical quantity of primary air based on the fuel supplied from the fuel supply nozzle; a primary combustion section for combusting the fuel and primary air; and a secondary-air supply nozzle disposed at place outside a periphery of the primary combustion section and serving to supply a secondary air.

A burner apparatus according to the invention comprises the features of claim 1.

Where the secondary air is supplied from the secondary-air supply nozzle inclined outwardly relative to the primary combustion section, as suggested by the burner apparatus of claim 1, the secondary air is not supplied directly to a primary combustion flame of the primary combustion in the primary combustion section. The secondary air is rather diffused, thus progressively come into contact with the primary combustion flame to be combusted. Hence, secondary combustion is carried out in a wider area. As a result, the temperature rise of the flame during the secondary combustion is suppressed so that the production of NOx is decreased.

If the outward inclination of the secondary-air supply nozzle relative to the primary combustion section is too great, the secondary air supplied from the secondary-air supply nozzle fails to come into adequate contact with the primary combustion flame and hence, the secondary combustion is not fully accomplished. If, on the other hand, this inclination is too small, the secondary air supplied from the secondary-air supply nozzle directly contacts the primary combustion flame to effect the secondary combustion so that the flame of the secondary combustion is too high in temperature. For this reason, the above inclination is limited to the range of 1° to 4°.

There are provided two or more of the secondary-air supply nozzles, as suggested by the burner apparatus of the invention. If the two or more secondary-air supply nozzles are disposed in the angular range of 160° with respect to the center of the primary combustion section, flows of the secondary air ejected from the secondary-air supply nozzles are deflected in the furnace so that the secondary air is diffused in the furnace to come into contact the primary combustion flame. Thus is provided the secondary combustion in a wider area. This is effective to further suppress the temperature rise of the flame of the secondary combustion and hence, the production of NOx is decreased still further.

The burner apparatus of the invention may also be arranged such that a regenerative media portion is provided at a secondary-air introduction portion for introducing the secondary air into the secondary-air supply nozzles whereas a suction device is provided for sucking the combustion exhaust gases in the furnace. During a non-combustion time when the secondary air is not supplied from the secondary-air supply nozzles, the above suction device may be operated to suck the combustion exhaust gases in the furnace and to introduce the exhaust gases to the above regenerative media portion via the secondary-air supply nozzles. Thus, the thermal energy of the combustion exhaust gases is stored in the regenerative media portion.

When a combustion operation is performed again, the secondary air may be supplied to the secondary-air supply nozzles via the regenerative media portion storing the thermal energy of the combustion exhaust gases, so that the heated secondary air is fed into the furnace from the secondary-air supply nozzles and used for the combustion. As a result, the running cost is reduced because a decreased quantity of fuel may be supplied from the fuel supply nozzle to heat the interior of the furnace to a predetermined temperature.

In order to provide for continuous combustion operation using such a burner apparatus, there may be provided at least one pair of burner apparatuses. One of the burner apparatuses carries out the combustion operation. In the meantime, the other apparatus does not carry out the combustion operation but introduces the combustion exhaust gases in the furnace to the regenerative media portion via the secondary-air supply nozzles, thereby allowing the regenerative media portion to store the thermal energy of the combustion exhaust gases. Such operations may be switched between these apparatuses for alternately carrying out the combustion operation.

These and other objects, advantages and features of the invention will become apparent from the following description thereof taken in conjunction with the accompanying drawings which illustrate specific embodiments of the invention.

### BRIEF DESCRIPTION OF THE DRAWINGS

Fig.1 is a sectional view illustrating a burner apparatus according to an embodiment 1 of the invention;
Fig.2 is a front view of the burner apparatus of the above embodiment 1 as viewed from the inside of a furnace;
Fig.3 is a front view of a burner apparatus as viewed from the inside of the furnace for illustrating a referential burner apparatus which includes a single secondary-air supply nozzle; and
Fig.4 is a sectional view illustrating a burner apparatus according to an embodiment 2 of the invention.

### DESCRIPTION OF THE PREFERRED EMBODIMENTS

Next, a burner apparatus according to an embodiment of the invention will be specifically described with reference to the accompanying drawings. It is noted that the burner apparatus of the invention is not limited to the following embodiments but changes or modifications may be made thereto as required so long such changes or modifications do not deviate from the effect of the invention.

### Embodiment 1

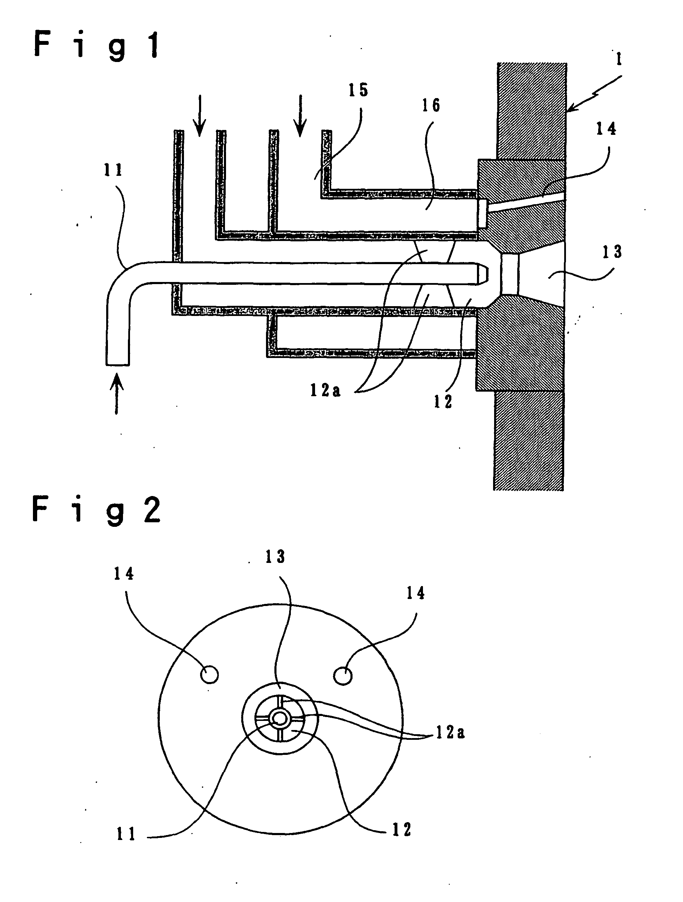

According to a burner apparatus of an embodiment 1, as shown in Figs.1 and 2, a fuel is supplied to a primary combustion section 13 via a fuel supply nozzle 11 whereas a less-than theoretical quantity of primary air based on the above fuel is introduced into a primary-air supply nozzle 12 defined externally of the fuel supply nozzle 11. Rotary vanes 12a provided in the primary-air supply nozzle 12 operate to swirlingly supply the primary air to the primary combustion section 13, thereby allowing the fuel and the primary air thus supplied to combust in the primary combustion section 13. A primary combustion flame is introduced into a furnace 1.

Where the less-than a theoretical quantity of primary air and the fuel are allowed to combust in the primary combustion section 13, a primary combustion in the primary combustion section 13 is incomplete so that the production of NOx is suppressed because of decreased temperature of the primary combustion flame introduced into the furnace 1. Incidentally, the quantity of the primary air supplied via the aforesaid primary-air supply nozzle may be adjusted to a factor of about 0.35 to 0.8 based on the theoretical quantity of air.

In the burner apparatus of the embodiment 1, two secondary-air supply nozzles 14 for supplying a secondary air are disposed at places outside a periphery of the above primary combustion section 13 and within an angular range of 160° with respect to the center of the primary combustion section 13. Furthermore, the above two secondary-air supply nozzles 14 are each inclined outwardly relative to the primary combustion section 13. The secondary air is supplied to the two secondary-air supply nozzles 14 via a secondary-air introduction portion 15 so as to be ejected into the furnace 1 through the individual secondary-air supply nozzles 14.

Where the secondary air is ejected into the furnace 1 via the secondary-air supply nozzles 14 individually inclined outwardly relative to the primary combustion section 13, the secondary air is not supplied directly to the primary combustion flame to be combusted. The secondary air ejected from the respective secondary air supply nozzles 14 is rather progressively diffused to come into contact with the primary combustion flame to be combusted. In the meantime, flows of the secondary air in the furnace 1 are deflected so that the secondary air comes into contact with the primary combustion flame as diffused in the furnace 1. Thus is provided a secondary combustion in a wider area. Hence, the temperature rise of the secondary combustion flame is suppressed so that the production of NOx is decreased.

According to the burner apparatus of the embodiment 1, there are provided two secondary-air supply nozzles 14 inclined outwardly relative to the primary combustion section 13. It is also possible to provide a greater number of secondary-air supply nozzles 14 so long as these nozzles are disposed within the angular range of 160° with respect to the center of the primary combustion section 13.

Next, examples and comparative examples of the invention will be cited to demonstrate that the production of NOx is decreased in a case where the burner apparatus of the embodiment 1 is used to carry out the combustion.

A burner apparatus of Example 1 was arranged as follows. That is, the burner apparatus of the embodiment 1 was provided with two secondary-air supply nozzles 14 at angular positions defining 120° with respect to a center of the primary combustion section 13, the secondary-air supply nozzles each inclined outwardly relative to the primary combustion section 13 at an angle of 2°.

On the other hand, a burner apparatus of Comparative Example 1 was arranged as follows. The apparatus was provided with six secondary-air supply nozzles 14 which were arranged along an overall circumference of the primary combustion section 13 and in a manner that a respective pair of adjoining secondary-air supply nozzles 14 were at angular positions defining 60° with respect to the center of the primary combustion section 13. Furthermore, each of the secondary-air supply nozzles 14 was not inclined outwardly relative to the primary combustion section 13 but extended straightway.

A burner apparatus of Comparative Example 2 was arranged as follows. Similarly to the apparatus of Example 1, two secondary-air supply nozzles 14 were disposed at angular positions defining 120° with respect to the center of the primary combustion section 13. Each of the secondary-air supply nozzles 14 was not inclined outwardly relative to the primary combustion section 13 but extended straightway.

A burner apparatus of Comparative Example 3 was arranged as follows. Two secondary air supply nozzles 14 were disposed at angular positions defining 180° with respect to the center of the primary combustion section 13. Similarly to the apparatus of Example 1, each of the secondary-air supply nozzles 14 was inclined outwardly relative to the primary combustion section 13 at an angle of 2°.

In each of the burner apparatuses of Example 1 and Comparative Examples 1 to 3, combustion was carried out under the conditions of: the ratio of the total quantity of the primary air and the secondary air versus the theoretical quantity of air (air ratio) ranging from 1.19 to 1.2; the temperatures of the primary air and secondary air (air temperature) ranging from 440°C to 456°C; and the temperature in the furnace 1 (furnace temperature) ranging from 1253°C to 1270°C, as listed in the following table 1. In each combustion, an NOx concentration of the exhaust gases (as converted based on 11%O₂) was determined. The results are listed in the following table.

**[Table 1]**

| | AIR RATIO | AIR TEMPERATURE (°C) | FURNACE TEMPERATURE (°C) | NOx CONCENTRATION (ppm: converted based on 11%O₂) |
|---|---|---|---|---|
| EXAMPLE 1 | 1.19 | 443 | 1270 | 37.5 |
| COMPARATIVE EXAMPLE 1 | 1.19 | 450 | 1270 | 69.3 |
| COMPARATIVE EXAMPLE 2 | 1.20 | 456 | 1254 | 58.3 |
| COMPARATIVE EXAMPLE 3 | 1.19 | 440 | 1253 | 51.1 |

The results indicated that the burner apparatus of Example 1 has achieved a significant reduction of the NOx concentration of the exhaust gases, as compared with the burner apparatuses of Comparative Examples 1 to 3. The apparatus of Example 1 has the arrangement wherein two secondary-air supply nozzles 14 are disposed at the angular positions defining 120° with respect to the center of the primary combustion section 13 and are each inclined outwardly relative to the primary combustion section 13 at an angle of 2°.

### Embodiment 2

A burner apparatus of an embodiment 2 has the same feature as the burner apparatus of the foregoing embodiment 1 in that the fuel is supplied to the primary combustion section 13 via the fuel supply nozzle 11 whereas a less-than theoretical quantity of primary air based on the above fuel is introduced into the primary-air supply nozzle 12 defined externally of the fuel supply nozzle 11. The rotary vanes 12a provided in the primary-air supply nozzle 12 operate to swirlingly supply the primary air to,the primary combustion section 13, thereby allowing the fuel and the primary air thus supplied to combust in the primary combustion section 13. The primary combustion flame is introduced into the furnace 1.

On the other hand, two secondary-air supply nozzles 14 for supplying the secondary air are disposed at places outside the periphery of the above primary combustion section 13 and within an angular range of 160° with respect to the center of the primary combustion section 13. Furthermore, the two secondary-air supply nozzles 14 are each inclined outwardly relative to the primary combustion section 13. The secondary air is supplied to the two secondary-air supply nozzles 14 via the secondary-air introduction portion 15 so as to be ejected into the furnace 1 through the respective secondary-air supply nozzles 14.

Therefore, the burner apparatus of the embodiment 2 also suppresses the temperature rise of the flame of the secondary combustion similarly to the apparatus of the embodiment 1. This results in the decreased production of NOx.

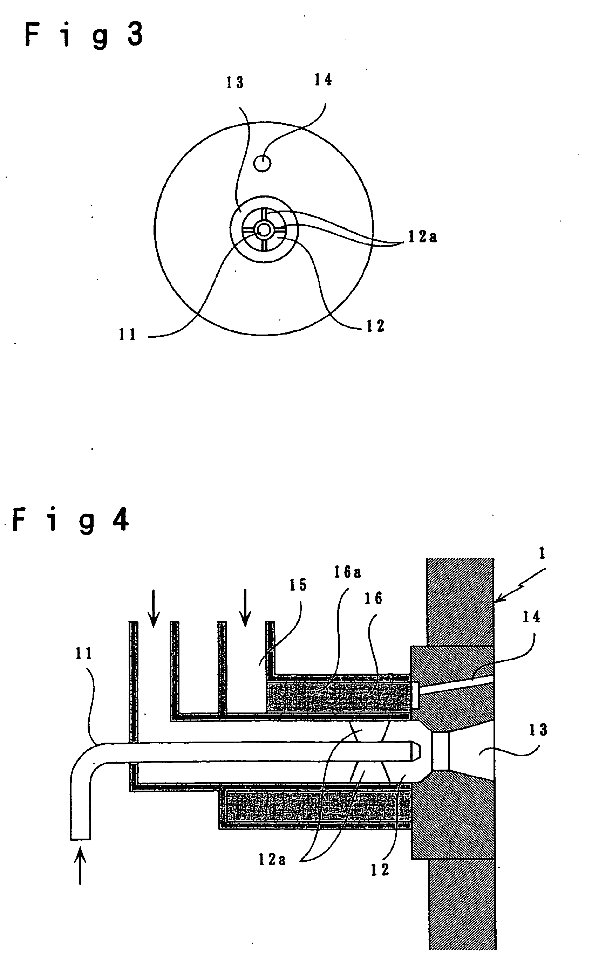

On the other hand, the burner apparatus of the embodiment 2 is further provided with a regenerative media portion 16 filled with a heat storage material 16a at the secondary-air introduction portion 15 for introducing the secondary air into the secondary-air supply nozzles 14, as shown in Fig.4, as well as with a suction device (not shown) for sucking the combustion exhaust gases in the furnace 1.

The burner apparatus of the embodiment 2 operates as follows in a case where the above secondary air is not ejected from the secondary-air supply nozzles 14 and the combustion is not carried out. The combustion exhaust gases are sucked by the above sucking device so as to be introduced into the above regenerative media portion 16 via the secondary-air supply nozzles 14. The heat storage material 16a of the regenerative media portion 16 is allowed to store the thermal energy of the combustion exhaust gases and thereafter, the combustion exhaust gases are discharged via the secondary-air introduction portion 15.

Where the burner apparatus carries out the combustion again after the thermal energy of the combustion exhaust gases is stored in the heat storage material 16a of the regenerative media portion 16, the secondary air is introduced to the regenerative media portion 16 via the secondary-air introduction portion 15 so as to be heated by the heat storage material 16a storing the thermal energy. Then, the secondary air thus heated is ejected into the furnace 1 from each of the secondary-air supply nozzles 14.

According to this arrangement, the heated secondary air acts to heat the interior of the furnace 1. Hence, the fuel supply nozzles 11 may supply a reduced quantity of fuel in order to raise the temperature of the furnace 1 to a predetermined level by way of the fuel combustion.

In order to provide for continuous combustion operation using such a burner apparatuses, there may be provided at least one pair of burner apparatuses which may be alternately operated for carrying out the above operations.

Although the present invention has been fully described by way of examples, it is to be noted that various changes and modifications will be apparent to those skilled in the art.

Therefore, unless otherwise such changes and modifications depart from the scope of the present invention, they should be construed as being included therein.

## Claims

1. A burner apparatus comprising: a fuel supply nozzle (11) for supplying a fuel; a primary-air supply nozzle (12); means for adjusting the quantity of the primary air supplied via said primary-air supply nozzle (12) to a less-than theoretical quantity of primary air based on the fuel supplied from the fuel supply nozzle (11); a primary combustion section (13) for combusting said fuel and primary air; and two or more secondary-air supply nozzles (14) which are inclined outwardly relative to said primary combustion section (13) at an angle of 1° to 4° and disposed at a place outside the periphery of the primary combustion section (13) and serving to supply a secondary air,
**characterized in that** the burner apparatus comprises only the two or more secondary-air supply nozzles (14) and all of the two or more secondary-air supply nozzles (14) are provided at places within an angular range of 160° with respect to the center of said primary combustion section (13).

2. The burner apparatus as claimed in claim 1, further comprising:
a regenerative media portion (16) disposed at a secondary-air introduction portion (15) for introducing the secondary air into the secondary-air supply nozzles (14) and serving to store a thermal energy of combustion exhaust gases, and
a suction device adapted to operate during a non-combustion time when the secondary air is not supplied from said secondary-air supply nuzzles (14), so as to suck combustion exhaust gases in a furnace and to introduce the exhaust gases to said regenerative media portion (16) via the secondary-air supply nuzzles (14).

## Patentansprüche

1. Brennervorrichtung mit: einer Brennstoffzufuhrdüse (11) zum Zuführen eines Brennstoffes; einer Primärluftzufuhrdüse (12); Mittel zum Einstellen der Menge der über die Primärluftzufuhrdüse (12) zugeführten Primärluft auf eine weniger als theoretische Menge von Primärluft basierend auf dem Brennstoff, der von der Brennstoffzufuhrdüse (11) zugeführt wird; einem primären Verbrennungsabschnitt (13) zum Verbrennen des Brennstoffes und der Primärluft; und zwei oder mehr Sekundärluftzufuhrdüsen (14), die bezogen auf den primären Verbrennungsabschnitt (13) in einem Winkel von 1° bis 4° nach außen geneigt sind und an einem Ort außerhalb des Umfangs des primären Verbrennungsabschnitts (13) angeordnet sind und dazu dienen, Sekundärluft zuzuführen,
**dadurch gekennzeichnet, dass** die Brennervorrichtung nur die zwei oder mehr Sekundärluftzufuhrdüsen (14) umfasst und dass alle der zwei oder mehr Sekundärluftzufuhrdüsen (14) an Orten innerhalb eines Winkelbereichs von 160° bezogen auf den Mittelpunkt des primären Verbrennungsabschnitts (13) vorgesehen sind.

2. Brennervorrichtung gemäß Anspruch 1, die weiter umfasst:
einen Regenerationsmedienteil (16), der an einem Sekundärlufteinleitungsteil (15) zum Einleiten der Sekundärluft in die Sekundärluftzufuhrdüsen (14) angeordnet ist und zum Speichern von Wärmeenergie von Verbrennungsabgasen dient und
eine Saugvorrichtung, die geeignet ist, im Betrieb zu sein während einer Nichtverbrennungszeit, wenn die Sekundärluft nicht von den Sekundärluftzufuhrdüsen (14) zugeführt wird, um so Verbrennungsabgase in einem Ofen anzusaugen und die Abgase über die Sekundärluftzufuhrdüsen (14) in den Regenerationsmedienteil (16) einzuleiten.

## Revendications

1. Appareil de brûleur comprenant : une buse d'alimentation de combustible (11) pour permettre l'alimentation en combustible , une buse d'alimentation d'air primaire (12), des moyens pour régler la quantité d'air primaire fournie par le biais de ladite buse d'alimentation d'air primaire (12) à une quantité inférieure à la quantité théorique d'air primaire, sur la base du combustible fourni par la buse d'alimentation de combustible (11), une section de combustion primaire (13) pour brûler ledit combustible et l'air primaire , et deux buses d'alimentation d'air secondaire ou plus (14) qui sont inclinées vers l'extérieur relativement à ladite section de combustion primaire (13), selon un angle de 1° à 4°, et disposées à un endroit en dehors de la périphérie de la section de combustion primaire (13) et servant à alimenter l'air secondaire,
**caractérisé en ce que** l'appareil de brûleur comprend seulement les deux buses d'alimentation d'air secondaire ou plus (14) et **en ce que** les deux buses d'alimentation en air secondaire ou plus (14) sont toutes disposées à des endroits ayant une gamme angulaire de 160° par rapport au centre de ladite section de combustion primaire (13).

2. Appareil de brûleur selon la revendication 1, comprenant en outre :
une partie de moyens de régénération (16) disposée dans une partie d'introduction d'air secondaire (15) afin d'introduire l'air secondaire dans les buses d'alimentation d'air secondaire (14) et servant à stocker l'énergie thermique des gaz d'échappement de la combustion, et
un dispositif d'aspiration adapté pour fonctionner pendant un temps de non-combustion, quand l'air secondaire n'est pas fourni par lesdites buses d'alimentation d'air secondaire (14), de façon à aspirer les gaz d'échappement de la combustion dans un four et à introduire les gaz d'échappement dans ladite partie de moyens de régénération (16) par le biais des buses d'alimentation d'air secondaire (14).
